(19) Europäisches Patentamt
European Patent Office
Office européen des brevets

(11) **EP 2 444 612 B1**

# (12) EUROPEAN PATENT SPECIFICATION

(45) Date of publication and mention
of the grant of the patent:
**27.03.2019 Bulletin 2019/13**

(21) Application number: **10789482.6**

(22) Date of filing: **15.06.2010**

(51) Int Cl.:
*F01N 3/08* (2006.01)     *B01D 53/94* (2006.01)
*F01N 3/28* (2006.01)

(86) International application number:
**PCT/JP2010/060092**

(87) International publication number:
**WO 2010/147107 (23.12.2010 Gazette 2010/51)**

(54) **EXHAUST PURIFICATION DEVICE AND EXHAUST PURIFICATION METHOD, FOR ENGINE**

ABGASREINIGUNGSVORRICHTUNG UND ABGASREINIGUNGSVERFAHREN FÜR EINEN
MOTOR

DISPOSITIF DE PURIFICATION D'ÉCHAPPEMENT ET PROCÉDÉ DE PURIFICATION
D'ÉCHAPPEMENT, POUR MOTEUR

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **18.06.2009   JP 2009145276**

(43) Date of publication of application:
**25.04.2012   Bulletin 2012/17**

(73) Proprietor: **UD Trucks Corporation
Saitama 362-8523 (JP)**

(72) Inventor: **MASAKI, Nobuhiko
Ageo-shi
Saitama 362-8523 (JP)**

(74) Representative: **Patentanwälte Vollmann Hemmer
Lindfeld
Partnerschaft mbB
Wallstraße 33a
23560 Lübeck (DE)**

(56) References cited:
| | |
|---|---|
| **EP-A1- 2 025 388** | **WO-A1-2008/120649** |
| **JP-A- 2 204 614** | **JP-A- 2 204 614** |
| **JP-A- 2000 265 828** | **JP-A- 2000 265 828** |
| **JP-A- 2003 314 256** | **JP-A- 2005 226 504** |
| **JP-A- 2005 226 504** | |

## Description

TECHNICAL FIELD

The present invention relates to an exhaust gas purification apparatus of an engine, which selectively reduces a nitrogen oxide (NOx) in exhaust gas by use of ammonia produced from a urea aqueous solution, and an exhaust gas purification method of an engine.

BACKGROUND ART

As a catalytic purification system which removes NOx included in exhaust gas of an engine, there has been proposed an exhaust gas purification apparatus as disclosed in Japanese Laid-open Patent Application Publication No. 2008-261253 (Patent Document 1). This exhaust gas purification apparatus injection-supplies an ammonia solution with a flow rate in accordance with an engine operation state to the exhaust gas on an exhaust upstream side of a selective catalytic reduction (SCR) catalyst disposed in an engine exhaust pipe, and selectively reduces NOx in the exhaust gas by the SCR catalyst, to convert NOx into harmless components. JP 2005-226504 describes a method for controlling an added amount of reducing agent by estimating an adsorbed amount of reducing agent to a NOx reduction catalyst.

CITATION LIST

PATENT LITERATURE

Patent Document 1: Japanese Laid-open Patent Application Publication No. 2008-261253
Patent Document 2: Japanese Laid-open Patent Application Publication No. 2005-226504

SUMMARY OF THE INVENTION

TECHNICAL PROBLEM

Meanwhile, ammonia which does not reduce NOx in exhaust gas but is adsorbed to an SCR catalyst and ammonia which does not reduce NOx in the exhaust gas but passes through the SCR catalyst and is discharged to the atmosphere are present, depending on an engine operation state. The ammonia which has passed through the SCR catalyst is oxidized by an oxidation catalyst disposed on an exhaust downstream side of the the SCR catalyst, whereby it is possible to suppress the discharging the ammpnia into the atmosphere. However, in a conventional proposed technology, the ammonia adsorbed to the SCR catalyst is not taken into consideration, but a flow rate of a urea aqueous solution to be injection-supplied to the exhaust gas on an exhaust upstream side of the SCR catalyst is controlled. Therefore, when an amount of the ammonia adsorbed to the SCR catalyst has a saturated state, the ammonia to be oxidized by the oxidation catalyst increases. Consequently, in the conventional proposed technology, an amount of ammonia which does not contribute to NOx purification is large, and it has not been easily considered that the urea aqueous solution is effectively utilized.

Therefore, taking into consideration the above problems up to now, an object of one aspect of the present invention is to provide an exhaust gas purification apparatus of an engine which estimates an amount of ammonia adsorbed to an SCR catalyst to control the dosing of a urea aqueous solution in accordance with the estimation result, to achieve the effective utilization of the urea aqueous solution, and an exhaust gas purification method of an engine.

SOLUTION TO PROBLEM

In consequence, an exhaust gas purification apparatus of an engine according to an embodiment of the present invention includes a selective reduction catalyst disposed in an exhaust pipe of the engine to selectively reduce NOx by use of ammonia produced from a urea aqueous solution, an dosing unit which doses the urea aqueous solution to an exhaust gas on an exhaust upstream side of the selective reduction catalyst, and a control unit having a built-in computer.

Moreover, in the exhaust gas purification apparatus of the engine according to a first embodiment, the control unit calculates an amount of the produced ammonia from an amount of the dosed urea aqueous solution in accordance with an engine operation state, and calculates a purification ratio of NOx by the selective reduction catalyst on the basis of a first NOx concentration in the exhaust gas discharged from the engine and a second NOx concentration in the exhaust gas passed through the selective reduction catalyst. Moreover, the control unit performs calculation to estimate an amount of the ammonia to be adsorbed to the selective reduction catalyst on the basis of the amount of the produced ammonia and the purification ratio of NOx, and corrects the amount of the urea aqueous solution to be dosed in accordance with the engine operation state on the basis of the amount of the adsorbed ammonia. Afterward, the control unit controls an operation of the dosing unit on the basis of the corrected amount of the urea aqueous solution to be dosed.

Moreover, in the exhaust gas purification apparatus of the engine, the control unit calculates a purification ratio of NOx by the selective reduction catalyst on the basis of a first NOx concentration in the exhaust gas discharged from the engine and a second NOx concentration in the exhaust gas passed through the selective reduction catalyst, and performs calculation to estimate an amount of the adsorbed urea aqueous solution corresponding to ammonia to be adsorbed to the selective reduction catalyst on the basis of an amount of the urea aqueous solution to be dosed in accordance with an engine operation state and the purification ratio of NOx. Moreover, the control unit corrects the amount of the urea aqueous solution to be dosed in accordance with the engine operation state on the basis of the amount of the adsorbed urea aqueous solution, and then controls an operation of the dosing unit on the basis of the corrected amount of the urea aqueous solution to be dosed.

On the other hand, in an exhaust gas purification method of an engine according to an embodiment of the present invention, a control unit corrects an amount of an urea aqueous solution to be dosed in accordance with an engine operation state on the basis of a purification ratio of NOx by a selective reduction catalyst, and doses the corrected amount of the urea aqueous solution to be dosed to an exhaust upstream side of the selective reduction catalyst.

ADVANTAGEOUS EFFECTS OF THE INVENTION

According to an embodiment of the present invention, in the case in which ammonia is adsorbed to a selective reduction catalyst, an amount of an urea aqueous solution to be dosed in accordance with an engine operation state is thus corrected, so that it is possible to suppress the ammonia passed through the selective reduction catalyst and discharged to the atmosphere, while acquiring the ammonia required for NOx purification by the selective reduction catalyst. In consequence, it is possible to achieve the effective utilization of the urea aqueous solution.

BRIEF DESCRIPTION OF THE DRAWINGS

FIG. 1 is an overall block diagram showing an example of an exhaust gas purification apparatus which embodies the present invention;
FIG. 2 is a flowchart showing an example of a control program; and
FIG. 3 is a flowchart showing another example of the control program.

DESCRIPTION OF EMBODIMENTS

Hereinafter, the present invention will be described in detail with reference to the accompanying drawings.

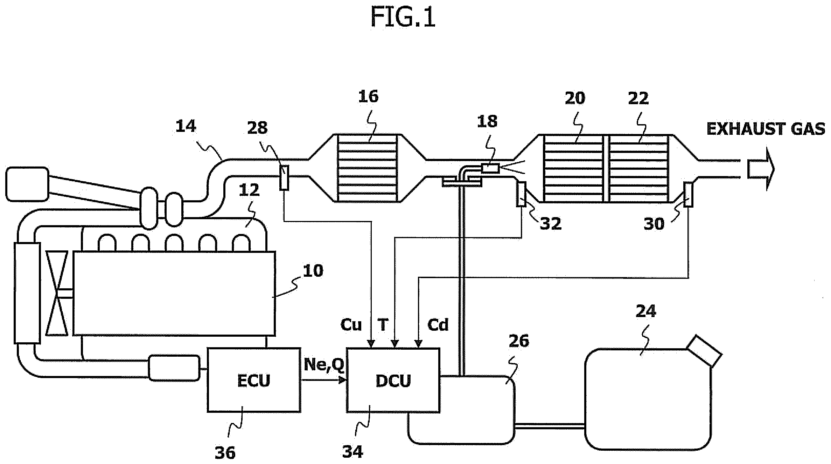

FIG. 1 shows an embodiment of an exhaust gas purification apparatus which embodies the present invention.
In an exhaust pipe 14 connected to an exhaust manifold 12 of an engine 10, a nitrogen oxidation catalyst 16 which oxidizes nitrogen monoxide (NO) into nitrogen dioxide ($NO_2$), an injection nozzle 18 which injection-supplies a urea aqueous solution, an SCR catalyst 20 which selectively reduces NOx by use of ammonia produced from the urea aqueous solution and an ammonia oxidation catalyst 22 which oxidizes the ammonia passed through the SCR catalyst 20 are arranged in this order along an exhaust flow-through direction. Moreover, the urea aqueous solution stored in a reducing agent tank 24 is supplied to the injection nozzle 18 through a reducing agent dosing unit 26 having a built-in pump and a built-in flow rate control valve therein. It is to be noted that the injection nozzle 18, the reducing agent tank 24 and the reducing agent dosing unit 26 are included to constitute an example of a dosing unit.
Here, the reducing agent dosing unit 26 may have a constitution which is divided into a pump module having the built-in pump, and a dosing module having the built-in flow rate control valve.
To the exhaust pipe 14 positioned on an exhaust upstream side of the nitrogen oxidation catalyst 16, a NOx sensor 28 which measures a NOx concentration Cu in exhaust gas discharged from the engine 10 is attached. On the other hand, to the exhaust pipe 14 positioned on an exhaust downstream side of the ammonia oxidation catalyst 22, a NOx sensor 30 which measures a NOx concentration Cd in the exhaust gas passed through the ammonia oxidation catalyst 22 is attached. Moreover, on the exhaust upstream side of the SCR catalyst 20, specifically, to the exhaust pipe 14 positioned between the injection nozzle 18 and the SCR catalyst 20, an exhaust temperature sensor 32 which measures a temperature (an exhaust temperature) T of the exhaust gas flowing into the SCR catalyst 20 is attached to. It is to be noted that in an exhaust gas purification apparatus in which the ammonia oxidation catalyst 22 is not disposed, the NOx sensor 30 measures the NOx concentration Cd in the exhaust gas passed through the SCR catalyst 20.
Each measurement signal of the NOx sensors 28 and 30 and the exhaust temperature sensor 32 is input into a reducing agent dosing control unit 34 having a built-in computer. Moreover, the reducing agent dosing control unit 34 is connected to an engine control unit 36 which electronically controls the engine 10 via a controller area network (CAN) and the like so that a rotation speed Ne and a load Q can appropriately be read as an engine operation state.
Here, as the load Q of the engine 10, for example, a fuel injection amount, an intake air flow, an intake air pressure, a supercharging pressure, an accelerator open degree, a throttle open degree or the like can be applied. Moreover, the rotation speed Ne and load Q of the engine 10 are not limited to a constitution to be read from the engine control unit 36, but may directly be measured by a known sensor.
Moreover, the reducing agent dosing control unit 34 executes a control program stored in a read only memory (ROM) or the like, to electronically control the reducing agent dosing unit 26 so that the ammonia is supplied to the SCR catalyst 20 in accordance with the engine operation state.

In such an exhaust gas purification apparatus, the urea aqueous solution injection-supplied (dosed) through the injection nozzle 18 is hydrolyzed by using exhaust heat and vapor in the exhaust gas, and is converted into ammonia which functions as a reducing agent. It is known that this ammonia selectively reduces NOx in the exhaust gas in the SCR catalyst 20, and is converted into harmless water ($H_2O$) and nitrogen ($N_2$). At this time, NO is oxidized to $NO_2$ in the nitrogen oxidation catalyst 16 to enhance a NOx purification ratio by the SCR catalyst 20, whereby a ratio between NO and $NO_2$ in the exhaust gas is improved to be suitable for the selective reductive reaction. On the other hand, the ammonia passed through the SCR catalyst 20 is oxidized through the ammonia oxidation catalyst 22 disposed on the exhaust downstream side the SCR catalyst 20, so that the ammonia is prevented from being discharged as it is to the atmosphere.

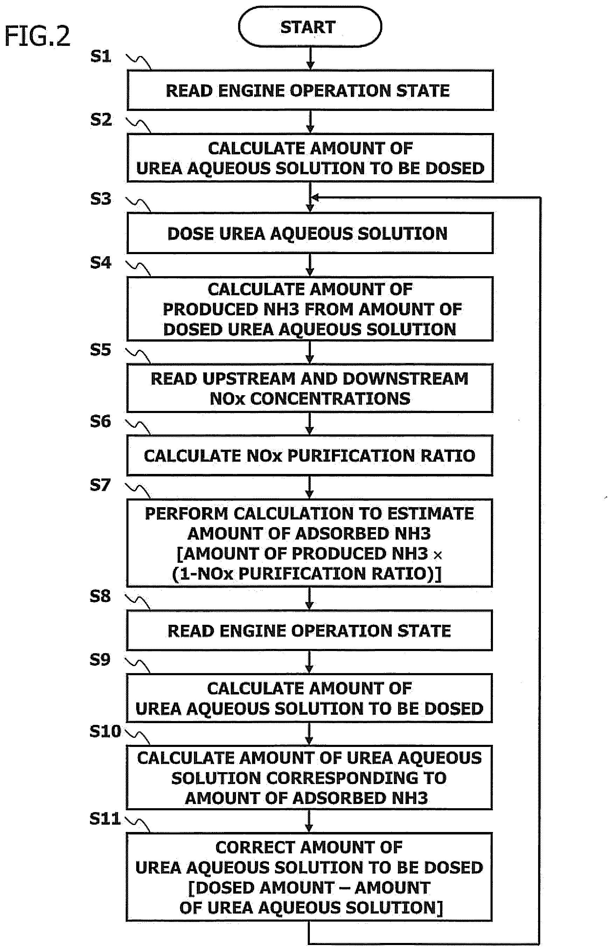

FIG. 2 shows an example of a control program to be executed by the reducing agent dosing control unit 34 with the start of the engine 10 as an opportunity.

In step 1 (abbreviated as "S1" in the drawings. This also applies to the following description.), the reducing agent dosing control unit 34 reads, as the engine operation state, the exhaust temperature T from the exhaust temperature sensor 32 and the rotation speed Ne and the load Q from the engine control unit 36.

In step 2, the reducing agent dosing control unit 34 calculates an amount of the urea aqueous solution to be dosed in accordance with the engine operation state. Specifically, the reducing agent dosing control unit 34 refers to a control map in which the amount of the dosed urea aqueous solution adapted to the exhaust temperature, the rotation speed and the load is set, to obtain the amount of the urea aqueous solution to be dosed in accordance with the exhaust temperature T, the rotation speed Ne and the load Q.

In step 3, the reducing agent dosing control unit 34 electronically controls each of the pump and flow rate control valve of the reducing agent dosing unit 26, in accordance with the amount of the urea aqueous solution to be dosed so that the urea aqueous solution is injection-supplied through the injection nozzle 18 in accordance with the engine operation state.

In step 4, the reducing agent dosing control unit 34 calculates an amount of the produced ammonia from the amount of the dosed urea aqueous solution, by use of a condition that two mols of ammonia is produced from one mol of urea.

In step 5, the reducing agent dosing control unit 34 reads the NOx concentrations Cu and Cd from the NOx sensors 28 and 30, respectively.

In step 6, the reducing agent dosing control unit 34 calculates the NOx purification ratio by the SCR catalyst 20 by use of an equation "NOx purification ratio equals NOx concentration Cu minus NOx concentration Cd divided by NOx concentration Cu".

In step 7, the reducing agent dosing control unit 34 perform calculation to estimate an amount of the ammonia to be adsorbed to the SCR catalyst 20 by use of an equation "the amount of the adsorbed ammonia equals the amount of the produced ammonia multiplied by 1 minus NOx purification ratio, both terms in the parentheses". In short, the reducing agent dosing control unit 34 presumes that the urea aqueous solution which does not contribute to the NOx purification in the urea aqueous solution injection-supplied through the injection nozzle 18 has been adsorbed to the SCR catalyst 20 in ammonia state.

In step 8, the reducing agent dosing control unit 34 reads, as the engine operation state, the exhaust temperature T from the exhaust temperature sensor 32 and the rotation speed Ne and the load Q from the engine control unit 36.

In step 9, the reducing agent dosing control unit 34 calculates the amount of the urea aqueous solution to be dosed in accordance with the engine operation state by a method similar to the step 2.

In step 10, the reducing agent dosing control unit 34 calculates the amount of the urea aqueous solution corresponding to the amount of the adsorbed ammonia estimated in the step 7, by use of a condition that one mol of ammonia is produced from 1/2 mol of urea.

In step 11, the reducing agent dosing control unit 34 subtracts the amount of the urea aqueous solution from the amount of the dosed urea aqueous solution, to correct the amount of the urea aqueous solution to be dosed. That is, it is noted that the ammonia adsorbed to the SCR catalyst 20 is utilized for the purification of NOx in the exhaust gas, and thus, the reducing agent dosing control unit 34 decreases the amount of the urea aqueous solution to be dosed. Then, upon the completion of the correction of the amount of the urea aqueous solution to be dosed, the reducing agent dosing control unit 34 returns the processing to the step 3.

According to such an exhaust gas purification apparatus, the amount of the urea aqueous solution to be dosed in accordance with the engine operation state is dosed to the exhaust upstream of the SCR catalyst 20. Afterward, the purification ratio of NOx to be selectively reduced by the SCR catalyst 20 is obtained on the basis of the NOx concentration in the exhaust gas discharged from the engine 10 and the NOx concentration in the exhaust gas passed through the ammonia oxidation catalyst 22. Moreover, it is considered that in the amount of the produced ammonia obtained from the amount of the dosed urea aqueous solution in accordance with the engine operation state, an amount represented by "1-NOx purification ratio" is the amount of the ammonia to be adsorbed to the SCR catalyst 20. Then, the amount of the urea aqueous solution corresponding to the amount of the adsorbed ammonia is subtracted from the amount of the urea aqueous solution to be dosed in accordance with the engine operation state to correct the amount of the urea aqueous solution to be dosed, and on the basis of the corrected amount of the urea aqueous solution to be dosed, the dosing of the urea aqueous solution is controlled. In short, the amount of the urea aqueous solution to be dosed in accordance with the engine operation state is corrected on the basis of the NOx purification ratio by the SCR catalyst 20, and the corrected amount of the urea aqueous solution to be dosed is dosed to the exhaust gas on the exhaust upstream side of the SCR catalyst 20.

Therefore, in the case in which the ammonia is adsorbed to the SCR catalyst 20, the amount of the urea aqueous solution to be dosed in accordance with the engine operation state is thus decreased and corrected. Therefore, the ammonia passed through the SCR catalyst 20 and discharged to the atmosphere can be suppressed, while acquiring the ammonia required for the NOx purification by the SCR catalyst 20. In consequence, the effective utilization of the urea aqueous solution can be achieved. Moreover, the amount of the ammonia which is not adsorbed to the SCR catalyst 20 but is introduced into the ammonia oxidation catalyst 22 decreases. Therefore, the ammonia oxidation catalyst 22 can be miniaturized, and the decrease of a weight and cost thereof can be expected.

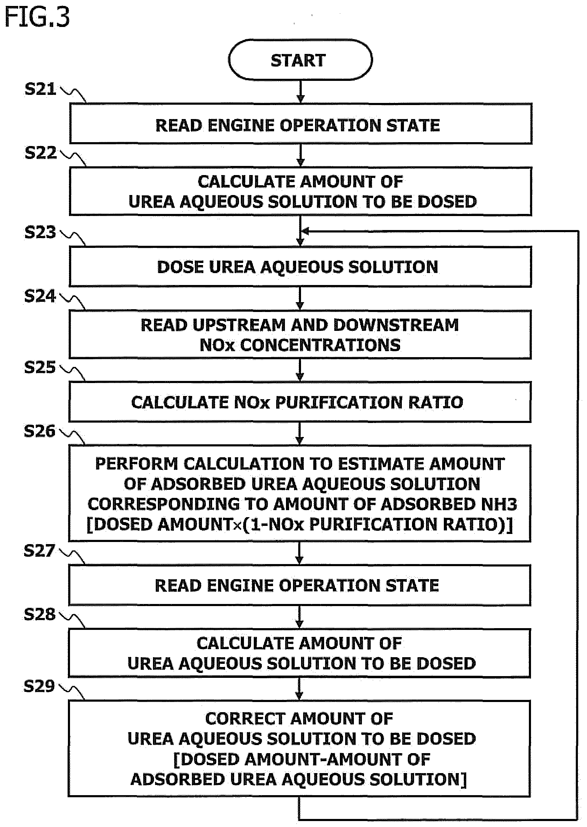

FIG. 3 shows another example of the control program to be executed by the reducing agent dosing control unit 34 with the start of the engine 10 as the opportunity. Here, the description of the processing which is common to the control program shown in FIG. 2 is simplified for a purpose of excluding redundant description.

In step 21, the reducing agent dosing control unit 34 reads, as the engine operation state, the exhaust temperature T from the exhaust temperature sensor 32 and the rotation speed Ne and the load Q from the engine control unit 36.

In step 22, the reducing agent dosing control unit 34 calculates the amount of the urea aqueous solution to be dosed in accordance with the engine operation state.

In step 23, the reducing agent dosing control unit 34 electronically controls each of the pump and flow rate control valve of the reducing agent dosing unit 26, in accordance with the amount of the urea aqueous solution to be dosed.

In step 24, the reducing agent dosing control unit 34 reads the NOx concentrations Cu and Cd from the NOx sensors 28 and 30, respectively.

In step 25, the reducing agent dosing control unit 34 calculates the NOx purification ratio by the SCR catalyst 20 by use of the equation "NOx purification ratio equals NOx concentration Cu minus NOx concentration Cd divided by NOx concentration Cu".

In step 26, the reducing agent dosing control unit 34 perform calculation to estimate the amount of the adsorbed urea aqueous solution corresponding to the amount of the ammonia to be adsorbed to the SCR catalyst 20 by use of an equation "the amount of the adsorbed urea aqueous solution equals the amount of the dosed urea aqueous solution multiplied by 1-NOx purification ratio, both terms in the parentheses".

In step 27, the reducing agent dosing control unit 34 reads, as the engine operation state, the exhaust temperature T from the exhaust temperature sensor 32 and the rotation speed Ne and the load Q from the engine control unit 36.

In step 28, the reducing agent dosing control unit 34 calculates the amount of the urea aqueous solution to be dosed in accordance with the engine operation state.

In step 29, the reducing agent dosing control unit 34 subtracts the amount of the adsorbed urea aqueous solution from the amount of the dosed urea aqueous solution, to correct the amount of the urea aqueous solution to be dosed. Afterward, the unit returns the processing to the step 23.

According to such an exhaust gas purification apparatus, in addition to the function and effect of the above example, the amount of the urea aqueous solution to be dosed is corrected on the basis of the urea aqueous solution, so that the control can be simplified.

It is to be noted that, in the case in which the amount of the adsorbed ammonia or the amount of the adsorbed urea aqueous solution corresponding thereto are calculated in the steps 7 and 26, the amount of the adsorbed ammonia or the amount of the adsorbed urea aqueous solution may be corrected on the basis of an ammonia concentration measured by an ammonia sensor attached to the exhaust pipe 14 positioned on the exhaust downstream side of the ammonia oxidation catalyst 22. In this case, the amount of the adsorbed ammonia or the amount of the adsorbed urea aqueous solution is obtained in consideration of the amount of the ammonia passed through the ammonia oxidation catalyst 22, and hence control accuracy can be enhanced. Moreover, the effective utilization of the urea aqueous solution can further be promoted through the enhancement of the control accuracy. Here, in an exhaust gas purification apparatus in which the ammonia oxidation catalyst 22 is not disposed, the ammonia sensor measures the concentration of the ammonia in the exhaust gas passed through the SCR catalyst 20.

Moreover, the present invention can be applied to an exhaust gas purification apparatus including the exhaust pipe 14 further provided with a diesel particulate filter (DPF) which collects and removes a particulate matter (PM), an exhaust gas purification apparatus including the DPF coated with a catalyst component which functions as an SCR catalyst, and the like.

REFERENCE SIGNS

10    engine
14    exhaust pipe
18    injection nozzle

20 SCR catalyst
24 reducing agent tank
26 reducing agent dosing unit
28 NOx sensor
30 NOx sensor
32 exhaust temperature sensor
34 reducing agent dosing control unit
36 engine control unit

**Claims**

1. An exhaust gas purification apparatus of an engine (10), comprising:

   a selective reduction catalyst (20) disposed in an exhaust pipe (14) of the engine (10) to selectively reduce a nitrogen oxide by use of ammonia produced from an urea aqueous solution;
   a dosing unit (26) which doses the urea aqueous solution to exhaust gas on an exhaust upstream side of the selective reduction catalyst (20); and
   a control unit (34) having a built-in computer,
   wherein the control unit (34) calculates an amount of the produced ammonia from an amount of the dosed urea aqueous solution in accordance with an engine operation state, wherein the condition is used that one mol of ammonia is produced from ½ mol of urea,
   calculates a purification ratio of the nitrogen oxide by the selective reduction catalyst (20) on the basis of a first nitrogen oxide concentration $C_U$ in the exhaust gas discharged from the engine (10) and a second nitrogen oxide concentration $C_d$ in the exhaust gas passed through the selective reduction catalyst (20), wherein the calculated purification ratio equals $\frac{(C_u - C_d)}{C_u}$, performs calculation to estimate an amount of the ammonia to be adsorbed to the selective reduction catalyst (20) on the basis of the amount of the produced ammonia and the purification ratio of the nitrogen oxide, wherein the estimated amount of ammonia to be adsorbed to the selective reduction catalyst (20) equals the amount of produced ammonia multiplied by

$$\left[ 1 - \frac{(C_u - C_d)}{C_u} \right],$$

   corrects the amount of the urea aqueous solution to be dosed in accordance with the engine operation state on the basis of the amount of the adsorbed ammonia, and
   controls an operation of the dosing unit (26) on the basis of the corrected amount of the urea aqueous solution to be dosed, wherein the control unit (34) further
   subtracts an amount of the adsorbed urea aqueous solution corresponding to the amount of the adsorbed ammonia from the amount of the urea aqueous solution to be dosed in accordance with the engine operation state, to correct the amount of the urea aqueous solution to be dosed in accordance with the engine operation state.

2. The exhaust gas purification apparatus of the engine (10) according to claim 1, wherein the control unit (34) further corrects the amount of the adsorbed ammonia on the basis of an ammonia concentration in the exhaust gas passed through the selective reduction catalyst (20).

3. The exhaust gas purification apparatus of the engine (10) according to claim 1, wherein the amount of the urea aqueous solution to be dosed in accordance with the engine operation state is calculated from an exhaust temperature, a rotation speed and a load of the engine (10).

4. An exhaust gas purification method of an engine (10), in which a control unit (34) having a built-in computer

   - calculates an amount of produced ammonia from an amount of dosed urea aqueous solution in accordance with an engine operation state, wherein the condition is used that one mol of ammonia is produced from ½ mol of urea;
   - calculates a purification ratio of the nitrogen oxide by a selective reduction catalyst (20) on the basis of a first nitrogen oxide concentration $C_U$ in the exhaust gas discharged from an engine (10) and a second nitrogen oxide concentration $C_d$ in the exhaust gas passed through the selective reduction catalyst (20), wherein the calculated purification ratio equals $\frac{(C_u - C_d)}{C_u}$;
   - performs calculation to estimate an amount of the ammonia to be adsorbed to the selective reduction catalyst (20) on the basis of the amount of the produced ammonia and the purification ratio of the nitrogen oxide, wherein the estimated amount of ammonia to be adsorbed to the selective reduction catalyst (20) equals the amount of produced ammonia multiplied by

$$\left[ 1 - \frac{(C_u - C_d)}{C_u} \right];$$

   - corrects an amount of an urea aqueous solution to be dosed in accordance with an engine operation state on the basis of a purification ratio of a nitrogen oxide by a selective reduction catalyst (20), and doses the corrected amount of the urea aqueous solution to be dosed to exhaust gas on an exhaust upstream side of the selective reduction catalyst (20) ; and

- subtracts an amount of the adsorbed urea aqueous solution corresponding to the amount of the adsorbed ammonia from the amount of the urea aqueous solution to be dosed in accordance with the engine operation state, to correct the amount of the urea aqueous solution to be dosed in accordance with the engine operation state.

5. The exhaust gas purification method according to claim 4, wherein the control unit (34) further corrects the amount of the adsorbed ammonia on the basis of an ammonia concentration in the exhaust gas passed through the selective reduction catalyst (20).

6. The exhaust gas purification method according to claim 4 or 5, wherein the amount of the urea aqueous solution to be dosed in accordance with the engine operation state is calculated from an exhaust temperature, a rotation speed and a load of the engine (10).

**Patentansprüche**

1. Abgas-Reinigungsvorrichtung eines Motors (10), umfassend:

einen selektiven Reduktionskatalysator (20), der in einem Abgasrohr (14) des Motors (10) angeordnet ist, um ein Stickstoffoxid durch Verwendung von Ammoniak selektiv zu reduzieren, das aus einer wässrigen Harnstofflösung erzeugt wird,
eine Dosiereinheit (26), die die wässrige Harnstofflösung in ein Abgas auf einer abgasstromaufwärtigen Seite des selektiven Reduktionskatalysators (20) dosiert, und
eine Steuereinheit (34) mit einem eingebauten Computer,
wobei die Steuereinheit (34) eine Menge des erzeugten Ammoniaks aus einer Menge der dosierten wässrigen Harnstofflösung gemäß einem Motorbetriebszustand berechnet, wobei die Bedingung genutzt wird, dass ein Mol Ammoniak aus ½ Mol Harnstoff erzeugt wird,
ein Reinigungsverhältnis des Stickstoffoxids durch den selektiven Reduktionskatalysator (20) auf der Basis einer ersten Stickstoffoxidkonzentration $C_U$ in dem Abgas, das aus dem Motor (10) abgegeben wird, und einer zweiten Stickstoffoxidkonzentration $C_d$ in dem Abgas, das durch den selektiven Reduktionskatalysator (20) geleitet wird, berechnet, wobei das berechnete Reinigungsverhältnis gleich $\dfrac{(C_u - C_d)}{C_u}$ ist,

eine Berechnung durchführt, um eine Menge des Ammoniaks, das durch den selektiven Reduktionskatalysator (20) zu absorbieren ist, auf der Basis der Menge des erzeugten Ammoniaks und dem Reinigungsverhältnis des Stickstoffoxids zu schätzen, wobei die geschätzte Menge von Ammoniak, das durch den selektiven Reduktionskatalysator (20) zu absorbieren ist, gleich der Menge von erzeugtem Ammoniak ist, die mit $\left[ 1 - \dfrac{(C_u - C_d)}{C_u} \right]$ multipliziert wird,

die Menge der wässrigen Harnstofflösung, die gemäß dem Motorbetriebszustand zu dosieren ist, auf der Basis der Menge des absorbierten Ammoniaks korrigiert und
einen Betrieb der Dosiereinheit (26) auf der Basis der korrigierten Menge der wässrigen Harnstofflösung, die zu dosieren ist, steuert, wobei die Steuereinheit (34) ferner
eine Menge der absorbierten wässrigen Harnstofflösung, die der Menge des absorbierten Ammoniaks entspricht, von der Menge der wässrigen Harnstofflösung, die gemäß dem Motorbetriebszustand zu dosieren ist, subtrahiert, um die Menge der wässrigen Harnstofflösung, die gemäß dem Motorbetriebszustand zu dosieren ist, zu korrigieren.

2. Abgas-Reinigungsvorrichtung des Motors (10) nach Anspruch 1, wobei die Steuereinheit (34) ferner die Menge des absorbierten Ammoniaks auf der Basis einer Ammoniakkonzentration in dem Abgas, das durch den selektiven Reduktionskatalysator (20) geleitet wird, korrigiert.

3. Abgas-Reinigungsvorrichtung des Motors (10) nach Anspruch 1, wobei die Menge der wässrigen Harnstofflösung, die gemäß dem Motorbetriebszustand zu dosieren ist, aus einer Abgastemperatur, einer Drehzahl und einer Last des Motors (10) berechnet wird.

4. Abgas-Reinigungsverfahren eines Motors (10), in dem eine Steuereinheit (34) mit einem eingebauten Computer

- eine Menge von erzeugtem Ammoniak aus einer Menge einer dosierten wässrigen Harnstofflösung gemäß einem Motorbetriebszustand berechnet, wobei die Bedingung genutzt wird, dass ein Mol Ammoniak aus ½ Mol Harnstoff erzeugt wird,

- ein Reinigungsverhältnis des Stickstoffoxids durch einen selektiven Reduktionskatalysator (20) auf der Basis einer ersten Stickstoffoxidkonzentration $C_U$ in dem Abgas, das aus einem Motor (10) abgegeben wird, und einer zweiten Stickstoffoxidkonzentration $C_d$ in dem Abgas, das durch den selektiven Reduktionskatalysator (20) geleitet wird, berechnet, wobei das berechnete Reinigungsverhältnis gleich $\dfrac{(C_u - C_d)}{C_u}$ ist,

- eine Berechnung durchführt, um eine Menge des Ammoniaks, das durch den selektiven Reduktionskatalysator (20) zu absorbieren ist, auf der Basis der Menge des erzeugten Ammoniaks und dem Reinigungsverhältnis des Stickstoffoxids zu schätzen, wobei die geschätzte Menge von Ammoniak, das durch den selektiven Reduktionskatalysator (20) zu absorbieren ist, gleich der Menge von erzeugtem Ammoniak ist, die mit $\left[1 - \dfrac{(C_u - C_d)}{C_u}\right]$ multipliziert wird,

- eine Menge einer wässrigen Harnstofflösung, die gemäß einem Motorbetriebszustand zu dosieren ist, auf der Basis eines Reinigungsverhältnisses eines Stickstoffoxids durch einen selektiven Reduktionskatalysator (20) korrigiert und die korrigierte Menge der wässrigen Harnstofflösung, die in ein Abgas auf einer abgasstromaufwärtigen Seite des selektiven Reduktionskatalysators (20) zu dosieren ist, dosiert und

- eine Menge der absorbierten wässrigen Harnstofflösung, die der Menge des absorbierten Ammoniaks entspricht, von der Menge der wässrigen Harnstofflösung, die gemäß dem Motorbetriebszustand zu dosieren ist, subtrahiert, um die Menge der wässrigen Harnstofflösung, die gemäß dem Motorbetriebszustand zu dosieren ist, zu korrigieren.

5. Abgas-Reinigungsverfahren nach Anspruch 4, wobei die Steuereinheit (34) ferner die Menge des absorbierten Ammoniaks auf der Basis einer Ammoniakkonzentration in dem Abgas, das durch den selektiven Reduktionskatalysator (20) geleitet wird, korrigiert.

6. Abgas-Reinigungsverfahren nach Anspruch 4 oder 5, wobei die Menge der wässrigen Harnstofflösung, die gemäß dem Motorbetriebszustand zu dosieren ist, aus einer Abgastemperatur, einer Drehzahl und einer Last des Motors (10) berechnet wird.

**Revendications**

1. Appareil de purification de gaz d'échappement d'un moteur (10), comprenant :

un catalyseur de réduction sélective (20) disposé dans un tuyau d'échappement (14) du moteur (10) pour réduire sélectivement les oxydes d'azote en utilisant de l'ammoniac produit à partir d'une solution aqueuse d'urée ;
une unité de dosage (26) qui dose la solution aqueuse d'urée pour des gaz d'échappement sur un côté amont d'échappement du catalyseur de réduction sélective (20) ; et
une unité de commande (34) comportant un ordinateur intégré, dans lequel l'unité de commande (34) calcule une quantité d'ammoniac produit à partir d'une quantité de la solution aqueuse d'urée dosée conformément à un état de fonctionnement du moteur, dans lequel la condition selon laquelle une mole d'ammoniac est produite à partir de 1/2 mole d'urée est utilisée,
calcule un taux de purification des oxydes d'azote par le catalyseur de réduction sélective (20) sur la base d'une première concentration en oxydes d'azote $C_U$ dans les gaz d'échappement évacués à partir du moteur (10) et d'une seconde concentration en oxydes d'azote $C_d$ dans les gaz d'échappement acheminés à travers le catalyseur de réduction sélective (20), dans lequel le taux de purification calculé est égal à $\dfrac{(C_u - C_d)}{C_u}$, effectue un calcul pour estimer une quantité d'ammoniac à adsorber sur le catalyseur de réduction sélective (20) sur la base de la quantité d'ammoniac produit et du taux de purification des oxydes d'azote, dans lequel la quantité estimée d'ammoniac à adsorber sur le catalyseur de réduction sélective (20) est égale à la quantité d'ammoniac produit multipliée par $\left[1 - \dfrac{(C_u - C_d)}{C_u}\right]$, corrige la quantité de solution aqueuse d'urée à doser en fonction de l'état de fonctionnement du moteur sur la base de la quantité de l'ammoniac adsorbé, et
commande une opération de l'unité de dosage (26) sur la base de la quantité corrigée de la solution aqueuse d'urée à doser,
dans lequel l'unité de commande (34) soustrait en outre une quantité de la solution aqueuse d'urée adsorbée correspondant à la quantité de l'ammoniac adsorbé à partir de la quantité de solution aqueuse d'urée à doser conformément à l'état de fonctionnement du moteur, afin de corriger la quantité de solution aqueuse d'urée à doser conformément à l'état de fonctionnement du moteur.

**2.** Appareil de purification de gaz d'échappement du moteur (10) selon la revendication 1, dans lequel l'unité de commande (34) corrige en outre la quantité de l'ammoniac adsorbé sur la base d'une concentration en ammoniac dans les gaz d'échappement étant passés à travers le catalyseur de réduction sélective (20).

**3.** Appareil de purification de gaz d'échappement du moteur (10) selon la revendication 1, dans lequel la quantité de solution aqueuse d'urée à doser en fonction de l'état de fonctionnement du moteur est calculée à partir d'une température d'échappement, d'une vitesse de rotation et d'une charge du moteur (10).

**4.** Procédé de purification de gaz d'échappement d'un moteur (10), dans lequel une unité de commande (34) comportant un ordinateur intégré

- calcule une quantité d'ammoniac produit à partir d'une quantité de solution aqueuse d'urée dosée conformément à un état de fonctionnement du moteur, dans lequel la condition utilisée est qu'une mole d'ammoniac soit produite à partir de 1/2 mole d'urée ;

- calcule un taux de purification des oxydes d'azote par un catalyseur de réduction sélective (20) sur la base d'une première concentration en oxydes d'azote $C_u$ dans les gaz d'échappement évacués à partir du moteur (10) et d'une seconde concentration en oxydes d'azote $C_d$ dans les gaz d'échappement acheminés à travers le catalyseur de réduction sélective (20), dans lequel le taux de purification calculé est

égal à $\dfrac{(C_u - C_d)}{C_u}$ ;

- effectue un calcul pour estimer une quantité d'ammoniac à adsorber sur le catalyseur de réduction sélective (20) sur la base de la quantité d'ammoniac produit et du taux de purification des oxydes d'azote, dans lequel la quantité estimée d'ammoniac à adsorber sur le catalyseur de réduction sélective (20) est égale à la quantité d'ammoniac produit multipliée par

$\left[ 1 - \dfrac{(C_u - C_d)}{C_u} \right]$ ,

- corrige une quantité d'une solution aqueuse d'urée à doser en fonction d'un état de fonctionnement du moteur sur la base d'un taux de purification des oxydes d'azote par un catalyseur de réduction sélective (20), et dose la quantité corrigée de la solution aqueuse d'urée à doser pour les gaz d'échappement sur un côté amont d'échappement du catalyseur de réduction sélective (20) ; et

- soustrait une quantité de la solution aqueuse d'urée adsorbée correspondant à la quantité de l'ammoniac adsorbé à partir de la quantité de solution aqueuse d'urée à doser conformément à l'état de fonctionnement du moteur, afin de corriger la quantité de solution aqueuse d'urée à doser conformément à l'état de fonctionnement du moteur.

**5.** Procédé de purification de gaz d'échappement selon la revendication 4, dans lequel l'unité de commande (34) corrige en outre la quantité de l'ammoniac adsorbé sur la base d'une concentration en ammoniac dans les gaz d'échappement étant passés à travers le catalyseur de réduction sélective (20).

**6.** Procédé de purification de gaz d'échappement selon la revendication 4 ou 5, dans lequel la quantité de la solution aqueuse d'urée à doser en fonction de l'état de fonctionnement du moteur est calculée à partir d'une température d'échappement, d'une vitesse de rotation et d'une charge du moteur (10).

FIG.1

EXHAUST GAS

Cu    T    Cd

Ne,Q

ECU

DCU

EP 2 444 612 B1

FIG.2

```
                    ┌─────────────┐
                    │    START    │
                    └──────┬──────┘
                           │
S1   ┌─────────────────────▼─────────────────────┐
     │        READ ENGINE OPERATION STATE         │
     └─────────────────────┬─────────────────────┘
                           │
S2   ┌─────────────────────▼─────────────────────┐
     │            CALCULATE AMOUNT OF             │
     │    UREA AQUEOUS SOLUTION TO BE DOSED       │
     └─────────────────────┬─────────────────────┘
                           │
S3   ┌─────────────────────▼─────────────────────┐
     │         DOSE UREA AQUEOUS SOLUTION         │
     └─────────────────────┬─────────────────────┘
                           │
S4   ┌─────────────────────▼─────────────────────┐
     │            CALCULATE AMOUNT OF             │
     │      PRODUCED NH3 FROM AMOUNT OF           │
     │        DOSED UREA AQUEOUS SOLUTION         │
     └─────────────────────┬─────────────────────┘
                           │
S5   ┌─────────────────────▼─────────────────────┐
     │      READ UPSTREAM AND DOWNSTREAM          │
     │            NOx CONCENTRATIONS              │
     └─────────────────────┬─────────────────────┘
                           │
S6   ┌─────────────────────▼─────────────────────┐
     │      CALCULATE NOx PURIFICATION RATIO      │
     └─────────────────────┬─────────────────────┘
                           │
S7   ┌─────────────────────▼─────────────────────┐
     │    PERFORM CALCULATION TO ESTIMATE         │
     │       AMOUNT OF ADSORBED NH3               │
     │        [AMOUNT OF PRODUCED NH3 ×           │
     │        (1-NOx PURIFICATION RATIO)]         │
     └─────────────────────┬─────────────────────┘
                           │
S8   ┌─────────────────────▼─────────────────────┐
     │       READ ENGINE OPERATION STATE          │
     └─────────────────────┬─────────────────────┘
                           │
S9   ┌─────────────────────▼─────────────────────┐
     │            CALCULATE AMOUNT OF             │
     │    UREA AQUEOUS SOLUTION TO BE DOSED       │
     └─────────────────────┬─────────────────────┘
                           │
S10  ┌─────────────────────▼─────────────────────┐
     │   CALCULATE AMOUNT OF UREA AQUEOUS         │
     │     SOLUTION CORRESPONDING TO              │
     │       AMOUNT OF ADSORBED NH3               │
     └─────────────────────┬─────────────────────┘
                           │
S11  ┌─────────────────────▼─────────────────────┐
     │            CORRECT AMOUNT OF               │
     │  UREA AQUEOUS SOLUTION TO BE DOSED         │
     │         [DOSED AMOUNT − AMOUNT             │
     │        OF UREA AQUEOUS SOLUTION]           │
     └─────────────────────┬─────────────────────┘
                           │
                           └──────────────────────┘
```

# FIG.3

```
              ( START )
                  │
S21 ─┐            ▼
     └─ READ ENGINE OPERATION STATE
S22 ─┐            │
     └─ CALCULATE AMOUNT OF
        UREA AQUEOUS SOLUTION TO BE DOSED
                  │
S23 ─┐            ▼◄──────────────────┐
     └─ DOSE UREA AQUEOUS SOLUTION    │
S24 ─┐            │                   │
     └─ READ UPSTREAM AND DOWNSTREAM  │
        NOx CONCENTRATIONS            │
S25 ─┐            │                   │
     └─ CALCULATE NOx PURIFICATION RATIO
S26 ─┐            │                   │
     └─ PERFORM CALCULATION TO ESTIMATE AMOUNT
        OF ADSORBED UREA AQUEOUS SOLUTION
        CORRESPONDING TO AMOUNT OF ADSORBED NH3
        [DOSED AMOUNT×(1-NOx PURIFICATION RATIO)]
S27 ─┐            │                   │
     └─ READ ENGINE OPERATION STATE   │
S28 ─┐            │                   │
     └─ CALCULATE AMOUNT OF
        UREA AQUEOUS SOLUTION TO BE DOSED
S29 ─┐            │                   │
     └─ CORRECT AMOUNT OF             │
        UREA AQUEOUS SOLUTION TO BE DOSED
        [DOSED AMOUNT-AMOUNT OF
        ADSORBED UREA AQUEOUS SOLUTION]
                  │                   │
                  └───────────────────┘
```

**EP 2 444 612 B1**

REFERENCES CITED IN THE DESCRIPTION

**Patent documents cited in the description**

- JP 2008261253 A
- JP 2005226504 A